# NEUE EUROPÄISCHE PATENTSCHRIFT

(11) **EP 1 233 891 B2**
(45) Veröffentlichungstag und Bekanntmachung des Hinweises auf die Entscheidung über den Einspruch: **06.04.2011**
(45) Hinweis auf die Patenterteilung: 17.03.2004
(21) Anmeldenummer: 00979627.7
(22) Anmeldetag: 28.11.2000
(51) Int. Cl.: B60T 7/04

(54) **SIMULATOR FÜR EIN NICHTHYDRAULISCHES BETÄTIGUNGSSYSTEM**
SIMULATOR FOR A NON-HYDRAULIC ACTUATOR SYSTEM
SIMULATEUR POUR SYSTEME D'ACTIONNEMENT NON HYDRAULIQUE

(30) Priorität: 30.11.1999 DE 29921027 U
(43) Veröffentlichungstag der Anmeldung: 28.08.2002
(73) Patentinhaber: AL-KO Kober AG, D-89359 Kötz (DE)
(72) Erfinder: REICHEL, Johannes, 04736 Waldheim (DE)
(74) Vertreter: Ernicke, Hans-Dieter
(86) Internationale Anmeldenummer: PCT/EP2000/011858
(87) Internationale Veröffentlichungsnummer: WO 2001/040038

(56) Entgegenhaltungen:
- EP-A1- 0 708 006
- WO-A-99/29548
- WO-A1-90/12718
- WO-A1-98/12086
- WO-A1-98/14355
- DE-A- 3 830 836
- DE-A- 19 723 665
- DE-A- 19 748 182

## Beschreibung

Die Erfindung betrifft einen Simulator für ein nichthydraulisches Betätigungssystem mit den Merkmalen im Oberbegriff des Hauptanspruchs. Die EP 0 708 006 zeigt einen solchen gattungsgemäßen Simulator.
Aus der WO 98/14355 ist ein anderer Wegsimulator in Verbindung mit einem Hauptbremszylinder bekannt.

Die DE-A 197 57 996 zeigt einen Pedalsimulator für eine elektro-hydraulische Fahrzeugbremsanlage. Der Pedalsimulator dient dazu, die Pedal-Reaktionskräfte eines normalen hydraulischen Bremssystems zu simulieren, um dem Fahrer das gleiche "Pedalgefühl" zu vermitteln. Der bekannte Pedalsimulator hat einen Stufenkolben, der ein Gasvolumen nebst einer darin angeordneten Feder komprimiert. Dabei entsteht eine nicht lineare progressiv ansteigende Reaktionskraft auf das Pedal, die in etwa dem Reaktionskraftverlauf einer reinen hydraulischen Fahrzeugbremse entsprechen soll. Der Stufenkolben wird vom Bremspedal über einen hydraulischen Hauptbremszylinder angetrieben, der zugleich den Steuer- und Antriebsdruck für die hydraulischen Bremskomponenten dieser kombinierten elektro-hydraulischen Bremsanlage liefert. Alternativ kann der Stufenkolben auch mit dem Bremspedal über ein mechanisches Getriebe verbunden sein.

Die DE-A-197 48 182 zeigt eine Einrichtung zur Betätigung einer Kraftfahrzeugbremsanlage, die ein in einem Drehlager begrenzt schwenkbar gelagertes Betätigungspedal aufweist, welches mittels einer federbelasteten Vorrichtung entgegen der Betätigungsrichtung vorgespannt ist und welches außerdem mit einem Wegsimulator in kraftübertragender Verbindung steht. Die Betätigungseinrichtung besitzt ferner eine Dämpfungseinrichtung zur definierten Einstellung einer vorbestimmten Kraft-Weg-Charakteristik. Die Dämpfungseinrichtung ist als ein magnetorheologischer Dämpfer ausgebildet. Der Dämpfer ist mit einer magnetorheologischen Flüssigkeit gefüllt, die bei Anlegen eines magnetischen Feldes auf Relativbewegungen mit Scherspannungen reagiert. Durch eine über den Weg oder die Geschwindigkeit der Bremspedalbetätigung veränderbare Bestromung des Elektromagneten kann dadurch eine einstellbare Gegenkraft erzeugt werden, die sowohl eine gewollte Hysterese im Wegverhalten bezogen auf die Kraft, als auch eine Dämpfung bezogen auf die Betätigungsgeschwindigkeit zur Folge hat. Der magnetorheologische Dämpfer braucht nämlich eine Stromversorgung und eine Steuerung, um in der gewünschten Weise wirken zu können. Wenn der Strom oder die Steuerung ausfallen, funktioniert der Dämpfer nicht mehr.

Die DE-A-38 30 836 befasst sich mit einer Vorrichtung zur Kraftsimulation in hand- oder fußbetätigten Servosteuersystemen von bemannten Fahrzeugen aller Art, insbesondere militärischen Kampfflugzeugen. Dies ist ein Servosteuersystem zur Verstärkung der menschlichen Muskelkraft. Der Kraftsimulator hat einen abgeschlossenen Hohlraum mit einer elektrorheologischen Flüssigkeit, die über ein mittels Elektroden angelegtes elektrisches Feld aktiviert, gesteuert und geregelt wird. Hierbei wird gezielt die Viskosität der elektrorheologischen Flüssigkeit verändert. Hierdurch gibt es die gleichen Probleme wie beim vorgenannten magnetorheologischen Dämpfer.

Die WO-A-99/29548 zeigt einen Pedalsimulator für hydraulische Fahrzeugbremssysteme. Die Simulatorwirkung basiert hierbei nur auf einer speziellen Federanordnung, die aus ein oder mehreren Einzelfedern besteht und die .. eine nicht lineare Federkennlinie haben soll. Der Pedalsimulator hat jedoch keine Drosselwirkung. Die Simulation wird allein durch die Federanordnung bewirkt.

Die DE-A 197 23 665 zeigt einen anderen programmierbaren elektronischen Pedalsimulator für eine elektrische Bremsanlage. Über eine Messeinrichtung am Bremspedal werden Weg und Kraft des Pedals gemessen und einer Steuereinheit zugeleitet. Diese steuert in Abhängigkeit von diesen Werten zum einen die Radbremsen und zum anderen einen elektrischen Aktor, der mit dem Bremspedal verbunden ist und auf das Pedal eine rückstellende Reaktionskraft ausübt, die entsprechend der vorgegebenen Programmierung in etwa der Reaktionskraft einer normalen hydraulischen Bremsanlage entsprechen soll.

Es ist Aufgabe der vorliegenden Erfindung, einen einfacheren und besseren Simulator aufzuzeigen.

Die Erfindung löst diese Aufgabe mit den Merkmalen im Hauptanspruch.
Der erfindungsgemäße Simulator ist für ein nichthydraulisches Betätigungssystem, insbesondere ein rein elektrisches Fahrzeugbremssystem, vorgesehen. Der Simulator ist zu diesem Zweck vorzugsweise als Pedalsimulator ausgebildet. Er kann alternativ aber auch für beliebige andere Betätigungssysteme eingesetzt werden, die auch statt eines Pedals ein beliebiges anderes Betätigungselement haben können.

Der erfindungsgemäße Simulator hat eine hydraulische Dämpfeinheit und mindestens eine Feder. Diese lassen sich besonders gut in ihrer Dämpf- und auch Reaktionscharakteristik einstellen, um das gewünschte Betätigungsgefühl oder "Pedalgefühl" von konventionellen hydraulischen Anlagen, insbesondere Bremsanlagen, möglichst genau zu simulieren. Das "Pedalgefühl" ist abhängig vom Pedalweg, von der Pedalstellung bei Beginn der Betätigung und von der Geschwindigkeit, mit der das Pedal gedrückt wird. Der Fuß kann außerdem bei der Pedalrückführung die gewohnte Gegenkraft und Rückstellkraft spüren. Das "Pedalgefühl" beinhaltet ferner ein unterschiedliches Dynamikverhalten je nach Kraft und Geschwindigkeit der Pedalbetätigung. Diese Kriterien werden vom erfindungsgemäßen Simulator nachgeahmt und übermittelt. Die hydraulische Dämpfeinheit basiert dabei vorzugsweise auf dem Bauprinzip einer Gasfeder.

Die hydraulische Dämpfeinheit ist besondere robust und betriebssicher, wobei sie ihre Charakteristik auch bei längerem Betrieb beibehält. Außerdem baut die hydraulische Dämpfeinheit sehr klein und ist kostengünstig. Sie braucht außerdem keine Zusatzenergien wie ein elektrischer Aktor. Durch den internen geschlossenen Hydraulik-Dämpfkreislauf sind auch keine externen Fluidversorgungen, Leitungsanschlüsse und sonstige Anbauten erforderlich.

Vorzugsweise hat die ohnehin mit einem inneren Federelement versehene hydraulische Dämpfeinheit zusätzlich ein äußeres Federelement, welches ggf. mehrteilig aus einer stärkeren Hauptfeder und einer schwächeren Zusatzfeder aufgebaut ist. Der mehrteilige Aufbau ermöglicht eine zunächst flacher und dann steiler ansteigende Federkennlinie.

Die Dämpfeinheit und das äußere Federelement sind parallel in Anordnung und Wirkung geschaltet. In der Kombination lassen sich die gewünschten Kennlinienverläufe hinsichtlich Weg, Größe, Geschwindigkeit und Richtung der Reaktionskräfte besonders gut nachbilden und simulieren. Dies gilt insbesondere auch für die Nachahmung der Pedalrückstellkräfte und -bewegungen bei Pedalentlastung.

Die hydraulische Dämpfeinheit hat ein mehrteiliges Überströmsystem und zumindest bereichsweise eine wegabhängige Dämpfcharakteristik. Es besteht eine Geschwindigkeitsabhängigkeit mit überlagerter Wegabhängigkeit, welche das Dynamikverhalten einer konventionellen hydraulischen Bremsanlage besonders gut nachahmt. Das Überströmsystem besteht dazu aus der Kombination von kolbenseitigen Drossel- und Rücklaufventilen mit einem stationären Bypass im Zylindermantel. Der Bypass hat einen veränderlichen Querschnitt, was sich beispielsweise durch mehrere unterschiedlich lange und unterschiedlich positionierte Längsnuten erreichen lässt. Der Bypass ist dabei so gewählt, dass sein Überströmquerschnitt anfangs relativ groß ist und dann über dem Pedalweg immer mehr abnimmt. Mit abnehmendem Bypassquerschnitt steigt der Einfluss der Drossel- und Rücklaufventile. Hierdurch wird einerseits bei Pedalbetätigung eine über dem Pedalweg immer stärker wirkende Gegenkraft simuliert, die zudem geschwindigkeitsabhängig ist. Gegen Ende des Pedalwegs erzeugt die stark progressive Kennung des Drosselventils in Überlagerung mit dem oder den Federelement(en) bei schneller Pedalbewegung das von der konventionellen hydraulischen Bremse gewohnte Widerstands- und Begrenzungsgefühl.

Andererseits wird bei Pedalentlastung durch das Rücklaufventil eine anfangs hohe und dann stetig abnehmende Gegenkraft zur rückstellenden Federkraft des äußeren Federelements aufgebaut. Durch den über dem Pedalrückweg zunehmenden Bypassquerschnitt wird die Gegenkraft entsprechend der abnehmenden Federkraft wieder verringert, wobei am Ende der Rückstellbewegung nur noch das innere Federelement wirksam ist und die normale Ausschubkraft der hydraulischen Dämpfeinheit entwickelt. Hierdurch werden die Rückstellkräfte des Simulators begrenzt und über den Rückweg in einer in etwa gleichbleibenden oder relativ niedrigen und schwach fallenden Kennlinie gehalten. Dieses Rückstellverhalten entspricht demjenigen einer konventionellen hydraulischen Bremsanlage.

Der Simulator kann ein oder mehrere Messeinrichtungen für die Betätigungsparameter und insbesondere die Betätigungskräfte und/oder die Betätigungswege, gegebenenfalls auch die Betätigungsgeschwindigkeiten, besitzen. Hierdurch lassen sich die für beispielsweise eine elektrische Fahrzeugbremsanlage erforderlichen Stellungs- und Steuersignale des Pedals in besonders platzsparender und aufwandsarmer Weise am Simulator gewinnen. Die Anordnung der Messeinrichtungen an den Anschlüssen des Simulators hat dabei den Vorteil, dass die Messeinrichtungen auch bei Störung der Simulatorfunktion, z.B. bei Federbruch, wirksam sind. Eine elektrische Bremsanlage erfüllt dann auch bei Ausfall des Simulators die erforderlichen Notfunktionen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Figur 1:: ein nichthydraulisches Betätigungssystem mit einem Simulator, insbesondere einem Pedalsimulator,
- Figur 2:: den Pedalsimulator im Längsschnitt und in vergrößerter Darstellung,
- Figur 3:: eine abgebrochene und vergrößerte Darstellung des Pedalsimulators von Figur 2 in Ausgangsstellung des Arbeitskolbens,
- Figur 4:: den Pedalsimulator von Figur 3 mit einer Mittelstellung des Arbeitskolbens,
- Figur 5:: den Pedalsimulatcr von Figur 3 und 4 mit einer Endstellung des Arbeitskolbens und
- Figur 6:: ein Kennliniendiagramm für die Simulation der Kennliniencharakteristik einer konventionellen hydraulischen Bremsanlage.

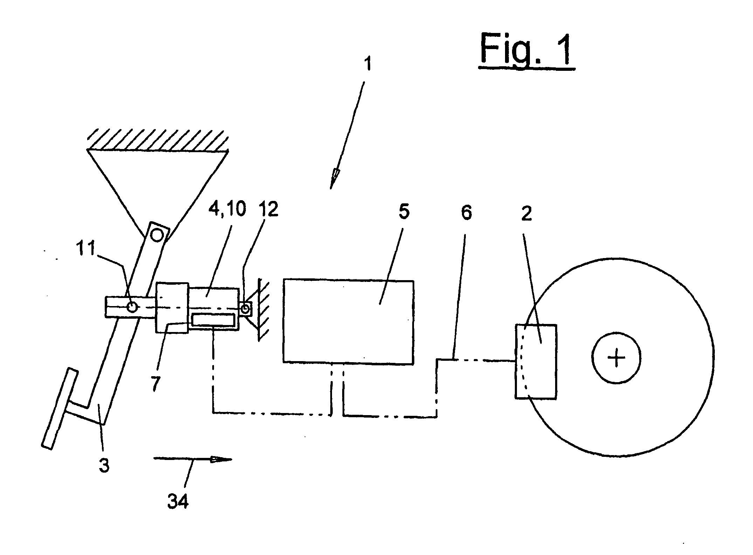

In Figur 1 ist ein nichthydraulisches Betätigungssystem (1) dargestellt, das in der bevorzugten Ausführungsform als rein elektrisches Fahrzeugbremssystem ausgestaltet ist. Es besteht aus einem Betätigungselement oder Auslöser (3), hier einem Bremspedal, das über einen Simulator (4), hier einen Pedalsimulator, mit einer Steuer- und Leistungseinheit (5) verbunden ist. Diese steuert über Leitungen (6) die elektrischen Radbremsen (2) an. Die Stellungs- und Kraftsignale für die Pedalbetätigung werden von einer Messeinrichtung (7) in geeigneter Weise erfasst und über Leitungen (6) an die Steuer- und Leistungseinheit (5) übermittelt. Vorzugsweise ist die Messeinrichtung (7) mit dem Simulator (4) verbunden bzw. in diesen integriert. Sie kann alternativ auch getrennt angeordnet sein.

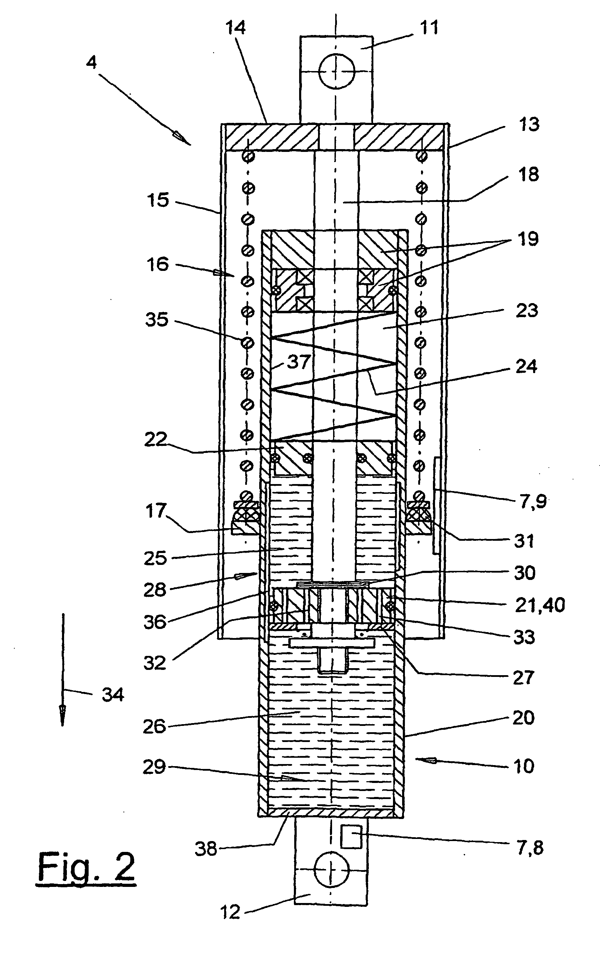

Figur 2 bis 5 zeigen den Pedalsimulator (4) im Längsschnitt. Er hat an den Enden zwei geeignete Anschlüsse (11,12), über die er einerseits mit dem Pedal (3) und andererseits mit einer relativ ortsfesten Abstützung (nicht dargestellt) verbunden ist. Vorzugsweise ist der Anschluss (11) für die Verbindung mit dem Pedal (3) vorgesehen. Die Zuordnung kann auch umgekehrt sein.

Der Pedalsimulator (4) hat eine hydraulische Dämpfeinheit (10), die zumindest teilweise oder bereichsweise eine wegabhängige Dämpfcharakteristik besitzt. Die Wegabhängigkeit ist einer Geschwindigkeitsabhängigkeit überlagert. Die hydraulische Dämpfeinheit (10) besitzt zur Erzielung der gewünschten Dämpfcharakteristik ein geeignetes Überströmsystem, welches einen wegabhängig veränderbaren Durchflussquerschnitt hat. Es besteht aus einem bewegten Drosselventil (30) und einem stationären Bypass (28) zur Erzielung der wegabhängigen Dämpfcharakteristik.

Die hydraulische Dämpfeinheit (10) ist als hydraulischer Dämpfzylinder ausgebildet, der vorzugsweise auf dem Bauprinzip einer Gasfeder basiert. Die hydraulische Dämpfeinheit (10) besteht aus einem Zylindergehäuse (20), an dessen einem Ende der Anschluss (12) außenseitig am Zylinderboden (38) befestigt ist und dessen anderes Ende durch ein Führungs- und Verschlusselement (19) verschlossen ist. Durch das Führungs- und Verschlusselement (19) ragt axial eine Kolbenstange (18) in den Zylinderinnenraum, die am rückwärtigen Ende den zweiten Anschluss (11) trägt. Am Vorderende ist die Kolbenstange (18) mit einem Arbeitskolben (21) verbunden, der an der Zylinderinnenwand (37) umfangseitig geführt ist und der zwei mit Hydrauliköl (29) gefüllte Arbeitsräume (25,26) im Zylinderinnenraum voneinander trennt.

Auf der Kolbenstange (18) ist ferner noch ein Trennkolben (22) abgedichtet und längsbeweglich geführt. Der Trennkolben (22) befindet sich zwischen dem Arbeitskolben (21) und dem Führungs- und Verschlusselement (19) und ist ebenfalls am Außenumfang dichtend im Zylinder (20) geführt. Der Trennkolben (22) schließt den einen Arbeitsraum (25) dicht ab. Andererseits begrenzt der Trennkolben (22) einen rückwärtigen Ausgleichsraum (23), in dem sich ein inneres Federelement (24) befindet. Der Ausgleichsraum (23) kann mit Gas gefüllt sein, welches unter einem beliebig geeigneten Druck steht. Das Gaspolster kann zugleich das Federelement (24) bilden oder in Verbindung mit einer weiteren Feder wirken. In der bevorzugten Ausführungsform ist zusätzlich eine geeignete mechanische Feder (24), z.B. eine Schraubenfeder, im Ausgleichsraum (23) angeordnet.

Der Arbeitskolben (21) besitzt an seiner hinteren zum Arbeitsraum (25) gerichteten Seite ein Drosselventil (30). Es ist z.B. als vorgespanntes Federscheibenventil ausgebildet und wirkt mit ein oder mehreren axialen Durchlasskanälen (32) im Kolben (21) zusammen. Der Arbeitskolben (21) weist ferner am vorderen und zum Arbeitsraum (26) weisenden Ende ein Rücklaufventil (27) auf, das mit ein oder mehreren axialen Durchlasskanälen (33) im Kolben (21) in Verbindung steht. Das Rücklaufventil (27) ist z.B. als Tellerventil mit einer fluiddurchlässigen Kegelfeder ausgebildet. Die Durchlasskanäle verbinden die Arbeitsräume (25,26) und sind vorzugsweise ringförmig und gleichmäßig um die Kolbenstange (18) verteilt, wobei die Durchlasskanäle (32) des Drosselventils (30) den inneren Kanalring bilden. Die Drosselcharakteristik des Drosselventils (30) und des Rücklaufventils (27) sind vorzugsweise unterschiedlich.

Außerdem ist im Bewegungsbereich des Arbeitskolbens (21) der axiale Bypass (28) vorhanden, der einen über seine Länge veränderlichen Durchfluss-Querschnitt aufweist. Der Querschnitt verringert sich über dem Betätigungsweg (34) des Pedals (3) bzw. dem Vorschubweg des Arbeitskolbens (21) gegenüber dem Zylinder (20). Der Betätigungsweg (34) und seine Richtung sind in Figur 1, 2 und 3 durch einen Pfeil angegeben.

Der Bypass (28) kann konstruktiv unterschiedlich ausgebildet sein. Im gezeigten Ausführungsbeispiel besteht er aus mehreren im wesentlichen längs gerichteten Nuten (36) an der Zylinderinnenwand (37), über die das Hydrauliköl (29) am Arbeitskolben (21) vorbei vom einen in den anderen Arbeitsraum (25,26) und zurück fließen kann. Die Nuten (36) sind gleichmäßig am Zylinderumfang verteilt. Sie haben zur Bildung des unterschiedlichen Durchfluss-Querschnitts untereinander eine unterschiedliche Länge und ggf. auch unterschiedliche axiale Position. Die Querschnittsform, Breite und Tiefe der Nuten (36) kann entsprechend des gewünschten Dämpfverhaltens gewählt werden. Die Nuten (36) können untereinander gleiche oder unterschiedliche Querschnittsgrößen haben.

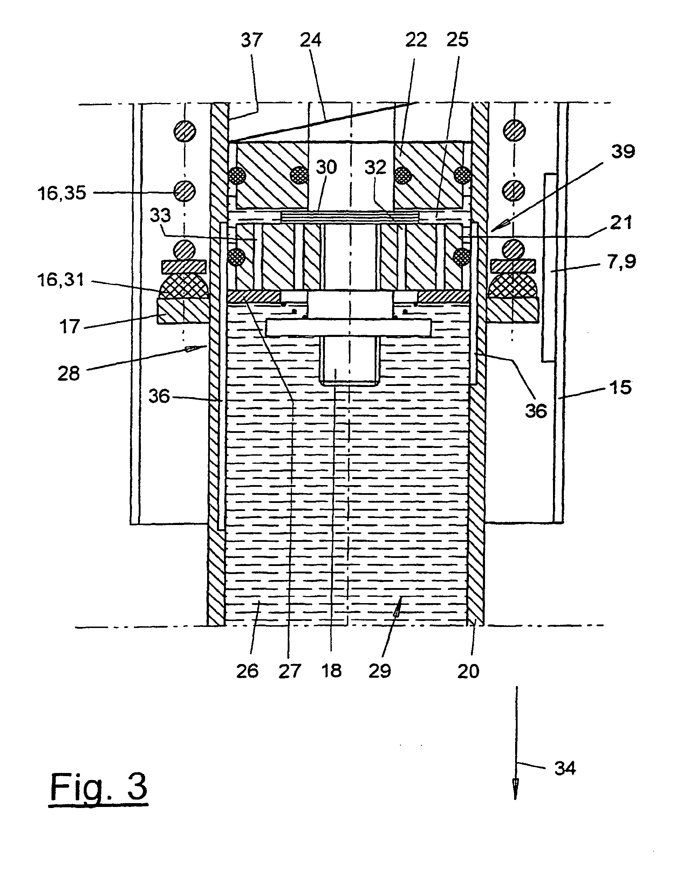

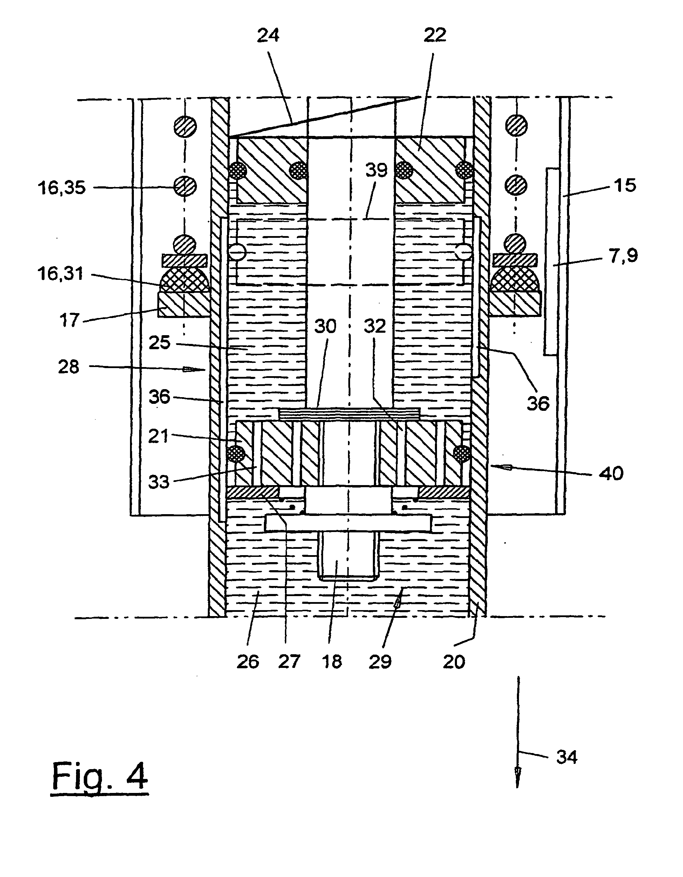

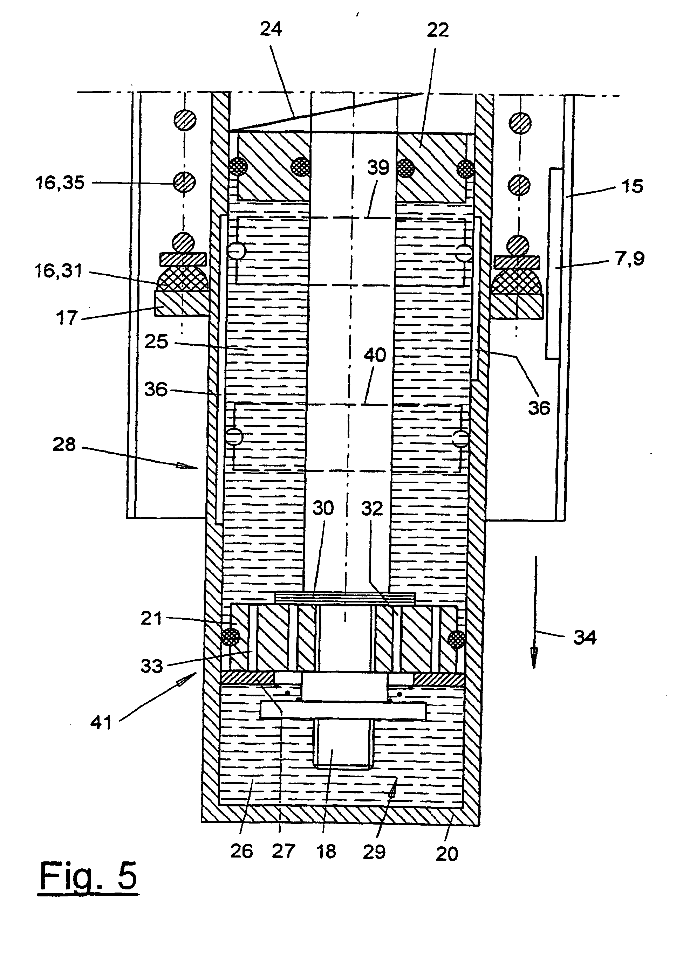

Vorzugsweise beginnen alle Nuten (36) etwa in Höhe der Ausgangsstellung (39) des unbelasteten Arbeitskolbens (21) nahe am Trennkolben (22) und reichen unterschiedlich weit in Richtung des Betätigungswegs (34). Die Ausgangsstellung (39) des Arbeitskolbens (21) am Anfang des Pedalwegs (34) ist in Figur 3 dargestellt. Figur 4 zeigt die mittlere Kolbenstellung (40), die auch der Übersichtsdarstellung von Figur 2 entspricht. Figur 5 verdeutlicht eine mögliche Endstellung (41) des Arbeitskolbens (21) in der Nähe des Zylinderbodens (38). Die vorhergehenden Kolbenstellungen (39,40) sind dabei in Figur 4 und 5 jeweils gestrichelt dargestellt.

In der gezeigten Ausführungsform endet zumindest eine Nut (36) etwa in der Mitte der ölgefüllten Arbeitsräume (25,26) zwischen dem Trennkolben (22) und dem gegenüberliegenden Zylinderboden (38). Figur 2 bis 5 zeigen hierbei schematisch zwei solche Nuten (36), von denen die rechte kürzer als die linke ist. In einer nicht dargestellten Variante können aber auch alle Nuten (36) länger sein und mit einem kleineren Abstand vor dem Zylinderboden (38) enden.

Dabei ist bei Beginn des Pedalwegs (34) die in der Anfangsstellung (39) vom Arbeitskolben (21) überdeckte Zahl der Nuten (36) und der durch die Summe ihrer Einzelquerschnitte gebildete Gesamt-Durchfluß-Querschnitt im Bypass (28) maximal. Figur 3 zeigt diese Kolbenstellung.

Über dem Pedalweg (34) wird der Arbeitskolben (21) gegenüber dem Zylinder (20) vorgeschoben, wobei durch die unterschiedliche Nutlänge die Zahl der vom Arbeitskolben (21) überdeckten Nuten (36) immer kleiner wird, so dass der Durchfluss-Querschnitt entsprechend abnimmt. Wie Figur 4 verdeutlicht, ist in der Mittelstellung (40) des Arbeitskolbens (21) die rechte kürzere Nut (36) nicht mehr vom Kolben (21) überdeckt und somit für den Bypass (28) inaktiv.

Nach Überschreiten der Mittelstellung (40) und im hinteren Bereich des Pedalwegs (34) sind in der gezeigten Ausführungsform gemäß Figur 5 keine Nuten (36) mehr im Eingriff. In dieser möglichen Endbereichsstellung (41) des Arbeitskolbens (21) ist der Bypass (28) außer Funktion bzw. nicht mehr vorhanden.

Über die Bemessung der Nuten (36) und die Einstellung der Drossel- und Rücklaufventile (30,27) sind in der nachfolgend beschriebenen Weise unterschiedliche Dämpfcharakteristiken auf Wunsch einstellbar.

Der Simulator (4) hat neben der hydraulischen Dämpfeinheit (10) ein zusätzliches äußeres Federelement (16). Das äußere Federelement (16) ist seinerseits von dem eingangs erwähnten Gehäuse (13) umgeben. Das äußere Federelement (16) kann ein- oder mehrteilig und unterschiedlich ausgebildet sein. In der gezeigten Ausführungsform ist das Federelement (16) zweiteilig. Es besteht aus einer Hauptfeder (35) und einer Zusatzfeder (31), die in Reihe hintereinander geschaltet sind. Die Hauptfeder (35) ist vorzugsweise als Schraubendruckfeder ausgebildet und umgibt den Zylinder (20) am rückwärtigen Ende. Sie ist wesentlich stärker als die Zusatzfeder (31) und hat einen wesentlich längeren Federweg. Die Zusatzfeder (31) besteht z.B. aus einem zähelastischen Elastomer mit geringer Federsteifigkeit und kleinem Federweg. Durch die Federkombination ergibt sich ein progressiver Kraftaufbau der bei Pedalbetätigung erzeugten Reaktionskraft und eine Federkennlinie des äußeren Federelements (16), die anfangs durch die Zusatzfeder (31) weich oder flach ansteigt und nach deren Blockieren in einen steileren Bereich entsprechend der Schraubenfeder (35) übergeht.

Das Gehäuse (13) ist als einseitig offenes Zylinderrohr ausgebildet, wobei die Öffnung zum Anschluss (12) weist und der Gehäuseboden (14) mit dem rückwärtigen Anschluss (11) und außerdem mit der Kolbenstange (18) starr verbunden ist. Am Gehäuseboden (14) stützt sich die Schraubenfeder (35) ab. Sie ist am anderen Ende auf der Zusatzfeder (31) abgestützt, welche sich wiederum an seitlich vorstehenden Beschlägen (17) am Zylinder (20) abstützt. Die Beschläge (17) können z.B. aus einem umlaufenden Ringflansch bestehen.

Der Simulator (4) kann in der eingangs erwähnten Weise ein oder mehrere Messeinrichtungen (7) aufweisen. Im gezeigten Ausführungsbeispiel ist ein Kraftmesser (8), vorzugsweise ein elektrischer Kraftsensor, am Anschluss (12) angeordnet. Er misst die vom Pedal (3) ausgeübte Kraft. Alternativ kann der Kraftsensor (8) auch an einer anderen geeigneten Stelle sitzen, z.B. im Bereich der Kolbenstange (18) und am Gehäuseboden (14). Im weiteren kann die Messeinrichtung einen Wegmesser, insbesondere einen Wegsensor (9) aufweisen, der z.B. innen an der Seitenwand (15) des Gehäuses (13) angeordnet ist. Er befindet sich beispielsweise im Bereich der Beschläge (17) und tastet deren axiale Verschiebebewegungen bei Pedalbetätigung ab. Der Wegsensor (9) kann in beliebig geeigneter Weise ausgebildet sein, z.B. als Potentiometer, Lineartaster oder dergleichen.

Der Pedalsimulator (4) funktioniert wie folgt:

Bei Betätigung des Pedals (3) wird die Pedalbewegung (34) über den Anschluss (11) in eine entsprechende Vorschubbewegung der Kolbenstange (18) und des Gehäusebodens (14) umgesetzt. Hierbei wird zum einen das äußere Federelement (16) am relativ ortsfest gelagerten Beschlag (17) zusammengedrückt und gespannt, wodurch eine rückstellende Reaktionskraft entsteht. Außerdem wird der an der Kolbenstange (18) befestigte Arbeitskolben (21) gegenüber dem mit dem Anschluss (12) verbundenen und relativ ortsfest gelagerten Zylinder (20) vorwärts bewegt. Hierbei strömt das Hydrauliköl (29) aus dem Arbeitsraum (26) über das Drosselventil (30) und ggf. die Nuten (36) in den Arbeitsraum (25). Zugleich wird das über die Kolbenstange (18) verdrängte Ölvolumen über eine Verschiebebewegung des Trennkolbens (22) im Ausgleichsraum (23) und ein Nachgeben des inneren Federelements (24) kompensiert. Durch geeignete Wahl und Auslegung des äußeren Federelementes (16), des Drosselventils (30) und der Nuten (36) lässt sich eine bedämpfte Reaktionskraft entsprechend einer normalen hydraulischen Bremsanlage erzielen. Über die Messeinrichtung (7) wird zugleich die Pedalkraft und -stellung gemessen und an die Steuer- und Leistungseinheit (5) gemeldet.

Das äußere Federelement (16) und die hydraulische Dämpfeinrichtung (10) sind parallel in Anordnung und Wirkung geschaltet. Die Dämpfeinrichtung (10) funktioniert zum einen geschwindigkeitsabhängig. Je schneller das Pedal (3) und die Dämpfeinheit (10) betätigt werden, desto höher ist die entwickelte Gegenkraft oder Reaktionskraft, wobei sich ein exponentieller Anstieg ergibt. Bei einem langsamen Treten des Pedals (3) zeigt sich eine weiche Anfangskennlinie mit einer später einsetzenden Progressivität und einer geringen Dämpfung. Die Reaktionskraft wird vor allem durch das äußere Federelement (16) aufgebaut.

Wird das Pedal (3) schneller betätigt, wirken sich die Drosselung und Dämpfung am Drosselventil (30) und an den Nuten (36) stärker aus, wobei die Dämpfeinheit (10) und das äußere Federelement (16) gemeinsam eine entsprechend höhere Reaktionskraft aufbauen. Je schneller das Pedal (3) getreten wird, desto größer ist der Anteil der Dämpfwirkung an der Reaktionskraft und desto schneller und steiler ist der Gegenkraftaufbau.

Durch den im Durchfluss-Querschnitt veränderlichen Bypass (28) sind die Höhe und Dynamik der Gegen- bzw. Reaktionskraft zusätzlich vom Pedalweg (34) und Kolbenweg sowie von der aktuellen Stellung des Pedals (3) und des Arbeitskolbens (21) abhängig. Die Wegabhängigkeit überlagert die vorgenannte Geschwindigkeitsabhängigkeit der Dämpfeinrichtung (10). Je nach Stellung des Arbeitskolbens (21) ist die Zahl der überdeckten und damit in Funktion befindlichen Nuten (36) des Bypass (28) kleiner oder größer, was Einfluss auf die Größe der Dämpfwirkung hat.

In der in Figur 3 dargestellten Anfangsstellung (39) des Pedals (3) bzw. des Arbeitskolbens (21) sind alle Nuten (36) aktiv, so dass das Hydrauliköl (29) relativ ungehindert über die Nuten (36) vom Arbeitsraum (26) in den Arbeitsraum (25) hinter den Arbeitskolben (21) strömen kann. Die Wirkung des Drosselventils (30) ist durch den überlagerten starken Bypass (28) relativ gering. Wie bei einer konventionellen hydraulischen Bremsanlage baut sich dadurch die Reaktionskraft am Anfang des Pedalwegs (34) relativ langsam auf.

Dies gilt vor allem, wenn das Bremspedal (3) langsam getreten wird. Die Dämpfwirkung ist insgesamt gering. Wird das Bremspedal (3) schneller und kräftiger getreten, ist die geschwindigkeitsabhängige Dämpfung zwar größer, weil sie auch am Bypass (28) wirkt. Im Bereich der Anfangsstellung (39) wirkt die Wegabhängigkeit durch den großen Bypass (28) aber trotzdem noch stärker. Sie überlagert und schwächt die geschwindigkeitsabhängige Dämpfung und das Drosselventil (30).

Ist hingegen das Bremspedal (3) bereits ein Stück betätigt, was z.B. bei einem anfänglich leichten Abbremsen des Fahrzeugs der Fall ist und in Figur 2 und 4 durch die dargestellte Mittelstellung (40) des Arbeitskolbens (21) verdeutlicht wird, ist die Zahl der vom Arbeitskolben (21) überdeckten aktiven Nuten (36) kleiner, so dass die Bypass-Wirkung entsprechend kleiner ist. Das Drosselventil (30) hat dadurch einen entsprechend größeren Einfluss.

Wird aus dieser Teilstellung des Pedals (3) bzw. des Pedalwegs (34) dann eine stärkere Bremsung, z.B. eine Notbremsung eingeleitet und das Pedal (3) entsprechend schnell und kräftig getreten, baut sich die von der hydraulischen Dämpfeinheit (10) entwickelte Reaktionskraft deutlich schneller und progressiver als am Anfang des Pedalwegs (34) auf. Das stark dämpfende Drosselventil (30) lässt die Reaktionskraft exponentiell ansteigen, wobei der geschwächte Bypass (28) zunehmend überlagert wird, der zudem seinerseits bei einer höheren Fluidgeschwindigkeit eine stärkere Drossel- und Dämpfwirkung erzeugt. Sobald der Arbeitskolben (21) in den Bereich der in Figur 5 gezeigten Endstellung (41) gelangt, entfällt nach Überfahren der längsten Nut (36) die Bypass-funktion und die Dämpfwirkung ist insoweit maximal und konstant bzw. nur noch von der Geschwindigkeit abhängig.

Die Wegabhängigkeit des Dämpfverhaltens und des Reaktionskraftaufbaus kann sich je nach Länge und Anordnung des Bypass (28) bzw. der Nuten (36) über die Gesamtlänge oder eine Teillänge des Pedalwegs (34) erstrecken. Dies ist eine Auslegungssache, die auf Wunsch gewählt werden kann. Wenn wie in der gezeigten Ausführungsform ein oder mehrere Nuten (36) bis zur genannten Mittelstellung (40) reichen, ist die Wegabhängigkeit der Dämpfwirkung nur über einen anfänglichen Teilbereich des Pedalwegs (34) bis zu dessen Mitte gegeben. Im hinteren Bereich des Pedalwegs (34) ist die wegabhängige Veränderbarkeit beendet und die diesbezügliche Dämpfwirkung konstant. Die entwickelte Reaktionskraft hängt in Höhe und Dynamik wegen des geschlossenen Bypass (28) dann nur noch vom Drosselventil (30) ab.

Reichen jedoch in einer alternativen und nicht dargestellten Ausführungsform die Nuten (36) weiter bis in die Nähe des Zylinderbodens (38), verändert sich die wegabhängige Dämpfwirkung über die Gesamtlänge des Pedalwegs (34).

Wenn die Fußkraft am Pedal (3) reduziert oder der Fuß vom Pedal (3) genommen wird, schieben die sich entspannenden inneren und äußeren Federelemente (24,16) den Arbeitskolben (21) zusammen mit dem Pedal (3) wieder in die Ausgangsstellung (39) zurück, wobei das Hydrauliköl (29) vom Arbeitsraum (25) über das Rücklaufventil (27) und ggf. die Nuten (36) und in den Arbeitsraum (26) zurückströmt.

Die bei der Rückbewegung des Pedals (3) wirksame Ausschubkraft wird wiederum wegabhängig bedämpft. Bei vollkommen durchgetretenen Pedalen (3) sind zwar die Federelemente (16,24) vollkommen gespannt und entwickeln eine maximale Rückstellkraft. Dieser steht jedoch eine Gegenkraft der Dämpfeinheit (10) gegenüber. In der Pedalund Kolbenendstellung (41) gemäß Figur 5 ist der Bypass (28) geschlossen, so dass das Hydrauliköl (29) nur über das Rücklaufventil (27) mit einer der Federdynamik entsprechend großen Drosselung oder Dämpfung strömen kann. Je weiter sich das in diesen Pedalwegbereich vor allem wirksame äußere Federelement (16) entspannt und den Arbeitskolben (21) ausschiebt, desto größer wird die Bypasswirkung, die das Rücklaufventil (27) überlagert. Die Drossel-Gegenkraft wird mit abnehmender Federkraft geringer, so dass sich bei entsprechender Dämpferauslegung eine in etwa gleichbleibende oder sich nur relativ geringfügig ändernde Ausschubkraft einstellen kann.

Am Ende des Pedalrückstellweges gemäß Figur 3 hat sich das äußere Federelement (16) entspannt, wobei auch die Bypasswirkung maximal ist, so dass für den letzten Bereich des Ausschubweges vor allem das innere Federelement (24) wirksam ist. Bei einer entsprechenden Dämpfereinstellung kann auch diese endseitige Ausschubkraft in etwa der anfänglichen Ausschubkraft entsprechen. Hierbei lässt sich eine über den gesamten Rückstellweg des Pedales (3) in etwa gleichbleibende Ausschubkraft erzeugen, die am Pedal (3) als Rückstellkraft auf den Fuß wirkt und im wesentliche der Kraftentwicklung einer konventionellen hydraulischen Bremsanlage entspricht.

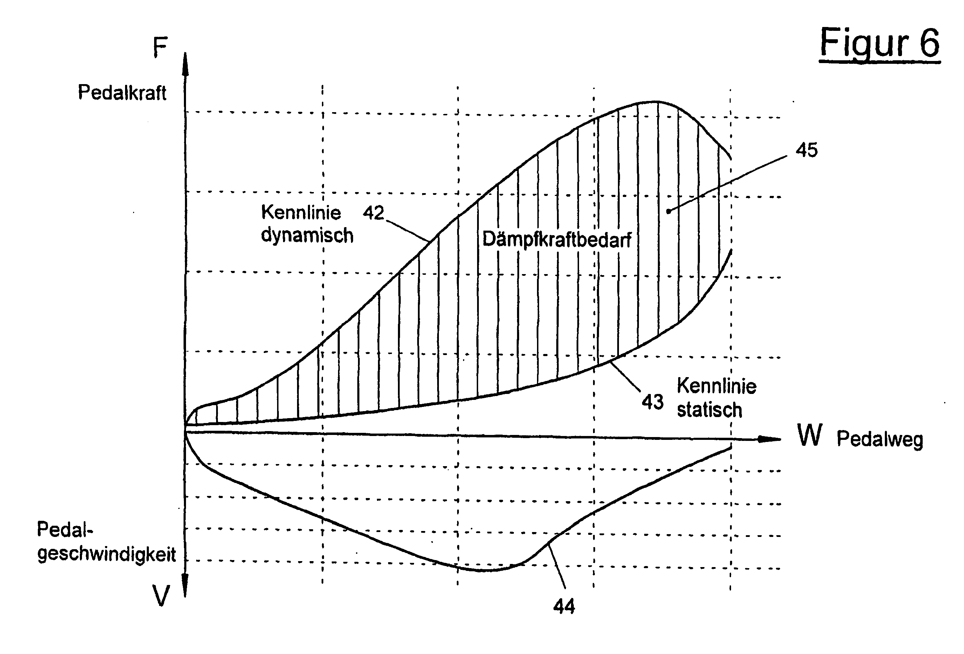

Figur 6 zeigt ein Kennliniendiagramm zur Verdeutlichung der Simulationswirkung des Pedalsimulators (4) anhand der Kennliniencharakteristik einer konventionellen hydraulischen Bremsanlage. Im oberen Teil des Diagramms ist die Pedalkraft F über den Pedalweg W (34) dargestellt. Der untere Teil des Diagramms zeigt die Pedalgeschwindigkeit V über den gleichen Pedalweg W.

Die untere sogenannte statische Kennlinie (43) verdeutlicht den Verlauf der Pedalkraft F bei einer konventionellen hydraulischen Bremse, wenn das Pedal sehr langsam getreten wird. Die Pedalkraft F steigt dabei zunächst im ersten Bereich von ca. 3/4 des Pedalwegs W relativ langsam und in etwa linear an. Im hinteren Bereich, der bei ungefährt einem Viertel des Pedalwegs W liegt, ist der Kraftanstieg wesentlich steiler und exponentiell.

Die obere dynamische Kennlinie (42) verdeutlicht den Verlauf der Pedalkraft F einer konventionellen hydraulischen Bremsanlage bei einem sehr schnellen Bremsen, z. B. einer Notfallbremsung, wobei der untere Diagrammteil den hierzu gehörigen Verlauf der Pedalgeschwindigkeit (44) zeigt. Die Pedalkraft F steigt hierbei gleich zu Anfang im ersten Bereich, z. B. dem ersten Viertel des Pedalwegs W deutlich stärker an als die statische Kennlinie (43). Im mittleren Bereich, der in etwa dem zweiten und dritten Viertel des Pedalwegs W entspricht, ist der dynamische Kraftanstieg noch deutlich steiler, wobei die entwickelte dynamische Pedalkraft F weit über der statischen Pedalkraft liegt. Das Maximum der dynamischen Kennlinie (42) wird im hinteren Bereich, etwa im letzten Viertel des Pedalwegs W erreicht, wobei die dynamische Pedalkraft danach wieder etwas abfällt. Die gezeigten Kennlinienverläufe (42,43,44) sind beispielhafter Natur und geben das Verhalten einer realen Hydraulikbremse bzw. der entwickelten Pedalkraft oder Pedalgegenkraft wieder. Die Kennlinien können je nach Art der Bremsauslegung auch variieren.

Der Pedalsimulator (4) ist entsprechend der vorgenannten Konstruktions- und Funktionsbeschreibung in der Lage, dieses Kennlinienverhalten einer konventionellen hydraulischen Bremsanlage zu simulieren. Der statische Kennlinienverlauf (43) wird hierbei durch das äußere Federelement (16) und ggf. auch das innere Federelement (24) simuliert. Die Federelemente (16,24) werden derart ausgelegt, dass ihre Kennlinie zumindest weitgehend dieser statischen Kennlinie (43) der konventionellen Hydraulikbremse entspricht. Der Bereich der Pedalkraft F zwischen der statischen Kennlinie (43) und der dynamischen Kennlinie (42) wird durch die geschwindigkeits- und wegabhängige hydraulische Dämpfeinheit (10) simuliert. Dieser Bereich wird als Dämpfkraftbedarf (45) bezeichnet und ist im Kennliniendiagramm von Figur 6 schraffiert dargestellt. Der Simulator (4) kann dadurch auch bei schnellen und kräftigen Betätigungen des Bremspedals (3) diese dynamische Kennlinie (42) simulieren. Die dabei entwickelte Pedalkraft F setzt sich zusammen aus der Summe der Federkraft der Federelemente (16,24) und der Dämpfkraft der hydraulischen Dämpfeinheit (10).

Das Kennliniendiagramm von Figur 6 verdeutlicht auch die Überlagerung der Geschwindigkeitsabhängigkeit durch die Wegabhängigkeit des Dämpfkraftverhaltens der hydraulischen Dämpfeinheit (10). Die dynamische Kennlinie (42) steigt nämlich durch diese Wegabhängigkeit auch noch nach Überschreiten des Geschwindigkeitsmaximus der Pedalgeschwindigkeitskurve (44) weiter an und hat ihr Maximum erst bei einem deutlich längeren Pedalweg W. Die Wegabhängigkeit überlagert dabei deutlich die geschwindigkeitsabhängige Dämpfkraft, welche nach Überschreiten des Maximums der Pedalgeschwindigkeit V mit der deutlich abfallenden Pedalgeschwindigkeit V stark sinkt. Die geschwindigkeitsabhängigen Dämpfkraftverluste werden durch die Wegabhängigkeit sogar überkompensiert.

Abwandlungen der gezeigten Ausführungsform sind in verschiedener Weise möglich. Zum einen lässt sich der Simulator (4) für beliebige Betätigungssysteme (1) und für beliebige Betätigungen (2) einsetzen, wobei seine Simulationswirkung entsprechend verändert und angepasst werden kann. Eine Betätigung (2) kann z.B. eine Fahrzeugkupplung oder ein anderes beliebiges Maschinenteil mit Betätigungs-Reaktionskräften sein. Die simulationsfähigen Reaktionskräfte können auch von nichthydraulischer Art sein. Desgleichen kann der Auslöser (3) als Handhebel statt als Pedal ausgebildet sein. Grundsätzlich kann der Auslöser (3) jede beliebige vorzugsweise vom Menschen betätigbare Art haben. Beispielsweise kann es sich hierbei auch um einen Handbremshebel in einem Fahrzeug handeln.

Die vorbeschriebene Dämpfcharakteristik kann in Anpassung an andere Simulationsaufgaben geändert werden. Abwandelbar sind die Ausgestaltung der Drosselund Rücklaufventile (30,27) sowie des Bypass (28).

Varianten sind ferner hinsichtlich des äußeren Federelementes (16) möglich, das zum einen aus mehr als zwei Federn bestehen kann. Zum anderen kann das äußere Federelement (16) statt der Schraubenfeder (35) ein beliebig anderes kompressibles und elastisch rückstellendes Material aufweisen, z.B. einen Gummiblock. Es kann ein oder mehrere gleichartige oder verschieden Komponenten haben. Das äußere Federelement (16) lässt sich außerdem in anderer Weise als im gezeigen Ausführungsbeispiel anordnen und mit der hydraulischen Dämpfeinheit (10) verbinden. Desgleichen kann das Gehäuse (13) abgewandelt oder auch weggelassen werden. Variabel sind zudem Anordnung und Ausbildung der Messeinrichtung (7).

### BEZUGSZEICHENLISTE

- 1: Betätigungssystem, Bremssystem
- 2: Betätigung, elektrische Radbremse
- 3: Betätigungselement, Auslöser, Pedal
- 4: Simulator, Pedalsimulator
- 5: Steuer- und Leistungseinheit
- 6: Leitung
- 7: Messeinrichtung
- 8: Kraftmesser, Kraftsensor
- 9: Wegmesser, Wegsensor
- 10: hydraulische Dämpfeinheit, Dämpfzylinder
- 11: Anschluss
- 12: Anschluss
- 13: Gehäuse
- 14: Gehäuseboden
- 15: Seitenwand
- 16: äußeres Federelement
- 17: Beschlag
- 18: Kolbenstange
- 19: Führungs- und Verschlusselement
- 20: Zylinder
- 21: Arbeitskolben
- 22: Trennkolben
- 23: Ausgleichsraum
- 24: inneres Federelement, Feder, Gaspolster
- 25: Arbeitsraum
- 26: Arbeitsraum
- 27: Rücklaufventil
- 28: Bypass
- 29: Hydraulikflüssigkeit, Hydrauliköl
- 30: Drosselventil
- 31: Zusatzfeder
- 32: Durchlasskanal
- 33: Durchlasskanal
- 34: Pedalweg, Betätigungsweg
- 35: Hauptfeder, Schraubenfeder
- 36: Nut
- 37: Zylinderinnenwand
- 38: Zylinderboden
- 39: Ausgangsstellung, Anfangsstellung
- 40: Mittelstellung
- 41: Endstellung, Endbereichsstellung
- 42: Kennlinie dynamisch
- 43: Kennlinie statisch
- 44: Verlauf Pedalgeschwindigkeit
- 45: Dämpfkraftbedarf

- F: Pedalkraft
- V: Pedalgeschwindigkeit
- W: Pedalweg

## Patentansprüche

1. Simulator für ein nichthydraulisches Betätigungssystem (1), insbesondere ein nur elektrisch betätigtes Bremssystem, wobei der Simulator (4) die Betätigungs-Reaktionskräfte eines hydraulischen Systems simuliert und zumindest ein Federelement (16) und eine fluidische Dämpfeinheit mit einem Zylinder (20) aufweist, **dadurch gekennzeichnet, dass** der Simulator (4) eine hydraulische Dämpfeinheit (10) mit Drosselung aufweist,
wobei die hydraulische Dämpfeinheit (10) eine geschwindigkeitsabhängige Dämpfcharakteristik mit überlagerter Wegabhängigkeit hat, die bei Simulatorbetätigung eine stark progressive Kennlinie aufweist, wobei
die hydraulische Dämpfeinheit (10) einen Zylinder (20) mit einer Kolbenstange (18) sowie einem Arbeitskolben (21) und einem Trennkolben (22) aufweist, wobei der mit mindestens einem Drosselventil (30) und mindestens einem Rücklaufventil (27) nebst Durchlasskanälen (32,33) versehene Arbeitskolben (21) zwischen zwei mit Hydraulikflüssigkeit (29) gefüllten Arbeitsräumen (25,26) angeordnet ist und der Trennkolben (22) zwischen dem einen Arbeitsraum (25) und einem Ausgleichsraum (23) mit einem inneren Federelement (24) angeordnet ist
und wobei
ein Überströmsystem als stationärer Bypass (28) ausgebildet ist, der an der Zylinderinnenwand (37) im Bewegungsbereich des Arbeitskolbens (21) zwischen den Arbeitsräumen (25,26) angeordnet ist, wobei der Querschnitt des Bypass (28) mit zunehmendem Pedalweg (34) abnimmt.

2. Simulator nach Anspruch 1, **dadurch**
**gekennzeichnet, dass** der Simulator (4) als Pedalsimulator für ein elektrisches Bremssystem (1) ausgebildet ist.

3. Simulator nach Anspruch 1 oder 2, **dadurch**
**gekennzeichnet, dass** am Simulator (4) mindestens eine Messeinrichtung (7) für die Betätigungsparameter, vorzugsweise die Betätigungskräfte und/oder Betätigungswege, angeordnet ist.

4. Simulator nach einem der Ansprüche 1 bis 3, **dadurch**
**gekennzeichnet, dass** der Simulator (4) ein inneres (24) und ein äußeres Federelement (16) aufweist.

5. Simulator nach Anspruch 4, **dadurch**
**gekennzeichnet, dass** das äußere Federelement (16) eine stärkere Hauptfeder (35), vorzugsweise eine Schraubendruckfeder, und eine schwächere Zusatzfeder (31) aufweist.

6. Simulator nach Anspruch 4 oder 5, **dadurch**
**gekennzeichnet, dass** die hydraulische Dämpfeinheit (10) und das äußeren Federelement (16) in Wirkung und Anordnung parallel geschaltet sind.

7. Simulator nach einem der Ansprüche 4 bis 6, **dadurch**
**gekennzeichnet, dass** die hydraulische Dämpfeinheit (10) von dem äußeren Federelement (16) und von einem außenseitigen Gehäuse (13) umgeben ist, wobei das äußere Federelement (16) und ggf. die Zusatzfeder (31) zwischen Beschlägen (17) an der Dämpfeinheit (10) und dem Gehäuseboden (14) eingespannt sind.

8. Simulator nach einem der Ansprüche 1 bis 7, **dadurch**
**gekennzeichnet, dass** die hydraulische Dämpfeinheit (10) nach Art einer Gasfeder ausgebildet ist.

9. Simulator nach einem der Ansprüche 1 bis 8, **dadurch**
**gekennzeichnet, dass** der Bypass (28) mehrere im wesentlichen längslaufende Nuten (36) an der Zylinderinnenwand (37) mit unterschiedlicher Länge aufweist.

10. Simulator nach einem der Ansprüche 1 bis 9, **dadurch**
**gekennzeichnet, dass** die Kolbenstange (18) am Gehäuseboden (14) befestigt ist.

11. Simulator nach einem der Ansprüche 1 bis 10, **dadurch**
**gekennzeichnet, dass** die hydraulische Dämpfeinheit (10) mit Anschlüssen (11,12) für eine Verbindung mit dem Betätigungssystem (1) versehen ist.

12. Simulator nach einem der Ansprüche 1 bis 11, **dadurch**
**gekennzeichnet, dass** an einem Anschluss (11,12) ein Kraftsensor (8) angeordnet ist.

13. Simulator nach einem der Ansprüche 1 bis 12, **dadurch**
**gekennzeichnet, dass** zwischen der hydraulischen Dämpfeinheit (10) und dem umgebenden Gehäuse (13) ein Wegsensor (8) angeordnet ist.

## Claims

1. Simulator for a non-hydraulic actuating system (1), in particular a brake system only actuated electrically, the simulator (4) simulating the actuating reaction forces of a hydraulic system and having at least one spring element (16) and a fluidic damping unit with a cylinder (20), **characterized in that** the simulator (4) has a hydraulic damping unit (10) with throttling,
wherein the hydraulic damping unit (10) has a speed-dependent damping characteristic with superimposed travel dependency which has a highly progressive characteristic curve during simulator actuation, wherein
the hydraulic damping unit (10) has a cylinder (20) with a piston rod (18) and also a working piston (21) and a separating piston (22), the working piston (21), provided with at least one throttle valve (30) and at least one return valve (27) in addition to through-passages (32, 33), being arranged between two working spaces (25, 26) filled with hydraulic fluid (29), and the separating piston (22) being arranged between the one working space (25) and a compensating space (23) containing an inner spring element (24),
and wherein an overflow system is designed as a stationary bypass (28) which is arranged on the cylinder inner wall (37) in the region of movement of the working piston (21) between the working spaces (25, 26), the cross section of the bypass (28) decreasing as the pedal travel (34) increases.

2. Simulator according to Claim 1, **characterized in that** the simulator (4) is designed as a pedal simulator for an electric brake system (1).

3. Simulator according to Claim 1 or 2, **characterized in that** at least one measuring device (7) for the actuating parameters, preferably the actuating forces and/or actuating paths, is arranged on the simulator (4).

4. Simulator according to one of Claims 1 to 3, **characterized in that** the simulator (4) has an inner spring element (24) and an outer spring element (16).

5. Simulator according to Claim 4, **characterized in that** the outer spring element (16) has a stronger main spring (35), preferably a helical compression spring, and a weaker auxiliary spring (31).

6. Simulator according to Claim 4 or 5, **characterized in that** the hydraulic damping unit (10) and the outer spring element (16) are connected in parallel in action and arrangement.

7. Simulator according to one of Claims 4 to 6, **characterized in that** the hydraulic damping unit (10) is surrounded by the outer spring element (16) and by a housing (13) on the outside, the outer spring element (16) and if need be the auxiliary spring (31) being secured in position between fittings (17) on the damping unit (10) and the housing base (14).

8. Simulator according to one of Claims 1 to 7, **characterized in that** the hydraulic damping unit (10) is designed like a pneumatic spring.

9. Simulator according to one of Claims 1 to 8, **characterized in that** the bypass (28) has a plurality of essentially longitudinally running grooves (36) of different length on the cylinder inner wall (37).

10. Simulator according to one of Claims 1 to 9, **characterized in that** the piston rod (18) is fastened to the housing base (14).

11. Simulator according to one of Claims 1 to 10, **characterized in that** the hydraulic damping unit (10) is provided with connections (11, 12) for connecting to the actuating system (1).

12. Simulator according to one of Claims 1 to 11, **characterized in that** a force sensor (8) is arranged on one connection (11, 12).

13. Simulator according to one of Claims 1 to 12, **characterized in that** a displacement sensor (8) is arranged between the hydraulic damping unit (10) and the surrounding housing (13).

## Revendications

1. Simulateur pour un système d'actionnement (1) non hydraulique, notamment un système de freinage actionné uniquement électriquement, le simulateur (4) simulant les forces de réaction d'actionnement d'un système hydraulique et présentant au moins un élément à ressort (16) et une unité d'amortissement fluidique avec un cylindre (20), **caractérisé en ce que** le simulateur (4) présente une unité d'amortissement hydraulique (10) avec étranglement, l'unité d'amortissement hydraulique (10) ayant une caractéristique d'amortissement dépendant de la vitesse avec une dépendance supplémentaire de la course, qui présente lors de l'actionnement du simulateur une courbe caractéristique fortement progressive, l'unité d'amortissement hydraulique (10) présentant un cylindre (20) avec une tige de piston (18) ainsi qu'un piston moteur (21) et un piston séparateur (22), le piston moteur (21) pourvu d'au moins une soupape d'étranglement (30) et d'au moins une soupape de non retour (27) en plus de canaux de passage (32, 33) étant disposé entre deux espaces de travail (25, 26) remplis de liquide hydraulique (29) et le piston séparateur (22) étant disposé entre l'un des espaces de travail (25) et un espace de compensation (23) avec un élément à ressort interne (24),
et un système de trop-plein étant réalisé sous forme de dérivation stationnaire (28) qui est disposée sur la paroi intérieure du cylindre (37) dans la région de déplacement du piston moteur (21) entre les espaces de travail (25, 26), la section transversale de la dérivation (28) diminuant avec l'augmentation de la course de la pédale (34).

2. Simulateur selon la revendication 1, **caractérisé en ce que** le simulateur (4) est réalisé en tant que simulateur à pédale pour un système de freinage électrique (1).

3. Simulateur selon la revendication 1 ou 2, **caractérisé en ce que** l'on dispose sur le simulateur (4) au moins un dispositif de mesure (7) pour les paramètres d'actionnement, de préférence les forces d'actionnement et/ou les courses d'actionnement.

4. Simulateur selon l'une quelconque des revendications 1 à 3, **caractérisé en ce que** le simulateur (4) présente un élément à ressort intérieur (24) et extérieur (16).

5. Simulateur selon la revendication 4, **caractérisé en ce que** l'élément à ressort extérieur (16) présente un ressort principal plus puissant (35), de préférence un ressort de compression hélicoïdal, et un ressort supplémentaire plus faible (31).

6. Simulateur selon la revendication 4 ou 5, **caractérisé en ce que** l'unité d'amortissement hydraulique (10) et l'élément à ressort extérieur (16) sont branchés en parallèle en termes d'action et de disposition.

7. Simulateur selon l'une quelconque des revendications 4 à 6, **caractérisé en ce que** l'unité d'amortissement hydraulique (10) est entourée par l'élément à ressort extérieur (16) et par un boîtier (13) du côté extérieur, l'élément à ressort extérieur (16) et éventuellement le ressort supplémentaire (31) étant serrés entre des ferrures (17) sur l'unité d'amortissement (10) et le fond du boîtier (14).

8. Simulateur selon l'une quelconque des revendications 1 à 7, **caractérisé en ce que** l'unité d'amortissement hydraulique (10) est réalisée sous forme d'un ressort à gaz.

9. Simulateur selon l'une quelconque des revendications 1 à 8, **caractérisé en ce que** la dérivation (28) présente plusieurs rainures (36) s'étendant essentiellement dans la direction longitudinale sur la paroi intérieure du cylindre (37) et de longueurs différentes.

10. Simulateur selon l'une quelconque des revendications 1 à 9, **caractérisé en ce que** la tige de piston (18) est fixée sur le fond du boîtier (14).

11. Simulateur selon l'une quelconque des revendications 1 à 10, **caractérisé en ce que** l'unité d'amortissement hydraulique (10) est pourvue de raccords (11, 12) pour une connexion au système d'actionnement (1).

12. Simulateur selon l'une quelconque des revendications 1 à 11, **caractérisé en ce qu'**un détecteur de force (8) est disposé sur un raccord (11, 12).

13. Simulateur selon l'une quelconque des revendications 1 à 12, **caractérisé en ce qu'**un capteur de position (8) est disposé entre l'unité d'amortissement hydraulique (10) et le boîtier environnant (13).
